Europäisches Patentamt

European Patent Office

Office européen des brevets

(19)

(11) EP 0 851 563 B1

(12) FASCICULE DE BREVET EUROPEEN

(45) Date de publication et mention
de la délivrance du brevet:
**10.04.2002 Bulletin 2002/15**

(51) Int Cl.7: **H02M 3/156**

(21) Numéro de dépôt: **97403116.3**

(22) Date de dépôt: **22.12.1997**

(54) **dispositif d'alimentation à découpage régulée en pertubations électromagnétiques**

Schaltnetzteileinrichtung mit kontrollierter elektromagnetischer Störung

Switch mode power supply device with controlled electromagnetic pertubation

(84) Etats contractants désignés:
**DE ES GB IT**

(30) Priorité: **24.12.1996 FR 9615979**

(43) Date de publication de la demande:
**01.07.1998 Bulletin 1998/27**

(73) Titulaire: **MAGNETI MARELLI FRANCE**
**92000 Nanterre (FR)**

(72) Inventeurs:
• **Boucly, Bernard**
**78150 Le Chesnay (FR)**
• **Lecrux, Eric**
**78190 Trappes (FR)**
• **Aubry, Vincent**
**91470 Limours (FR)**

(74) Mandataire: **Bérogin, Francis**
**Cabinet Plasseraud**
**84, rue d'Amsterdam**
**75440 Paris Cedex 09 (FR)**

(56) Documents cités:
**US-A- 4 720 668**     **US-A- 4 841 220**
**US-A- 5 180 964**     **US-A- 5 343 140**

• **ANGELO BRAMBILLA ET AL.: "Study and Implementation of a Low Conduction Loss Zero-Current Resonant Switch" IEEE TRANSACTIONS ON INDUSTRIAL ELECTRONICS, vol. 41, no. 2, avril 1994, NEW YORK, US, pages 241-249, XP000458490**
• **FRANK GOODENOUGH: "Resonant-mode controller runs switching supplies at 1.5 MHz" ELECTRONIC DESIGN, vol. 36, no. 13, 13 juin 1988, HASBROUCK HEIGHTS, US, pages 43-48, XP002041607**
• **E. DALLAGO ET AL.: "High-frequency current transducers in a control system for quasiresonant power convertors" IEE PROCEEDINGS SCIENCE, MEASUREMENT & TECHNOLOGY, vol. 142, no. 3, mai 1995, STEVENAGE, BG, pages 223-230, XP000530415**
• **WOJCIECH: "Zero-Voltage-Switching Multi-Resonant Technique - A Novel Approach to Improve Performance of High-Frequency Quasi-Resonant Converters" IEEE PESC '88 RECORD, avril 1988, pages 9-17, XP002041608**
• **FRED C. LEE: "High-Frequency Quasi-Resonant Converter Technologies" PROCEEDINGS OF THE IEEE, vol. 76, no. 4, avril 1988, NEW YORK, US, pages 377-390, XP002041609**

## Description

La présente invention est relative à un dispositif d'alimentation à découpage d'une charge comprenant une alimentation reliée à ladite charge par une structure à résonance comportant, placés en série, un commutateur, une première inductance et une deuxième inductance, un premier condensateur étant monté en parallèle sur ledit commutateur, une cathode d'une première diode étant reliée entre lesdites première et deuxième inductances, l'anode de ladite diode étant reliée à la masse et un deuxième condensateur étant placé entre la deuxième inductance et ladite charge, une armature dudit deuxième condensateur étant reliée à la masse.

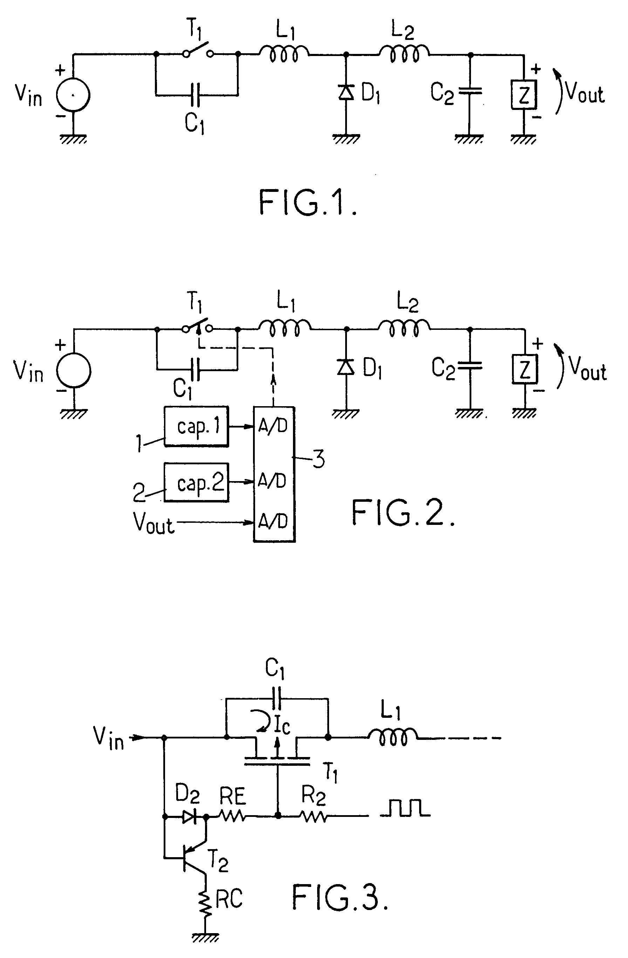

Les dispositifs d'alimentation à découpage actuellement connus et notamment d'après le US-A-4 720 668, émettent et conduisent, dans la plupart de leurs conditions d'utilisation, des perturbations électromagnétiques. Un exemple de dispositif d'alimentation à découpage est représenté à la figure 1. Ce dispositif comprend une alimentation $V_{in}$ reliée à une charge Z par l'intermédiaire d'une structure à résonance. Cette structure comporte, reliés en série, un commutateur $T_1$, une première inductance $L_1$ et une deuxième inductance $L_2$. Un premier condensateur $C_1$ est monté en parallèle par rapport au commutateur $T_1$ et un deuxième condensateur $C_2$ est placé entre la deuxième inductance $L_2$ et la charge Z, une armature de ce condensateur $C_2$ étant reliée à la masse. Une première diode $D_1$ est placée entre les deux inductances $L_1$ et $L_2$, l'anode de cette première diode étant reliée à la masse.

Afin de minimiser les perturbations électromagnétiques émises, ce dispositif à alimentation à découpage possède une structure à résonance. Afin d'atteindre la résonance du premier condensateur $C_1$ et de la première inductance $L_1$, une technique appelée "Commutation au zéro de la tension" ou encore "Zéro Voltage Switching" (ZVS) est couramment utilisée pour commander l'ouverture et la fermeture du commutateur $T_1$. Pour que les pertes de commutation soient faibles, il faut commander l'ouverture lorsque la diode devient passante. De plus, le blocage de cette diode génère des oscillations à haute fréquence liées à la valeur de l'inductance et au condensateur. Il s'ensuit des perturbations électromagnétiques rayonnées et conduites.

Cette technique connue demande l'utilisation de comparateurs rapides et précis ainsi que de nombreux circuits logiques. Toutefois, ces comparateurs et circuits logiques ont une faible robustesse vis-à-vis des perturbations électromagnétiques extérieures et intérieures au dispositif d'alimentation. De plus, cette technique est mal adaptée aux composants à grande dispersion ainsi qu'aux conditions d'utilisation changeantes, par exemple lorsque la tension d'alimentation et la tension de charge sont variables. Elle s'adapte également mal aux charges Z variables.

La présente invention a pour but de réguler les perturbations électromagnétiques émises et conduites par un dispositif d'alimentation à découpage à un taux minimal et ce, quelles que soient les conditions d'utilisation de ce dispositif d'alimentation.

A cet effet, selon l'invention, un dispositif d'alimentation à découpage d'une charge comprenant une alimentation reliée à ladite charge par une structure à résonance comportant, placés en série, un commutateur, une première inductance et une deuxième inductance, un premier condensateur étant monté en parallèle sur ledit commutateur, une cathode d'une première diode étant reliée entre lesdites première et deuxième inductances, l'anode de la première diode étant reliée à la masse et un deuxième condensateur étant placé entre ladite deuxième inductance et ladite charge, une armature dudit deuxième condensateur étant reliée à la masse, est essentiellement caractérisé en ce que le dispositif d'alimentation comprend en outre des premiers moyens de détection de la décharge dudit premier condensateur pour définir un instant d'obtention d'un multiple d'une demi-résonance du courant circulant dans le dispositif, des deuxièmes moyens de détection de pics de courant traversant ledit premier condensateur pour déterminer l'instant où les perturbations électromagnétiques dans le dispositif sont nulles, ainsi qu'un calculateur permettant de définir une durée pendant laquelle les moyens de détection de la décharge dudit premier condensateur mesurent une tension positive et les moyens de détection des pics du courant convertissent les valeurs des pics de courant en une tension moyenne, cette durée correspondant à la période d'ouverture du commutateur.

Le dispositif suivant l'invention peut comporter en outre une ou plusieurs des caractéristiques suivantes :

- les premiers moyens de détection de la décharge du premier condensateur comprennent un premier capteur placé entre la tension d'alimentation et le commutateur, et les deuxièmes moyens de détection de pics du courant comprennent un deuxième capteur placé entre le premier condensateur et la première inductance ;
- le premier capteur comprend une deuxième diode, une première résistance ainsi qu'une deuxième résistance placées en série, le commutateur étant relié entre les première et deuxième résistances, un deuxième transistor étant placé en parallèle sur la deuxième diode et relié à une troisième résistance elle-même reliée à la masse ; et
- le deuxième capteur comprend une inductance primaire placée en série avec le premier condensateur, une inductance secondaire couplée par air à l'inductance primaire et placée en parallèle à une quatrième résistance elle-même reliée à la masse et à une troisième diode, cette troisième diode étant reliée à un troisième condensateur lui-même relié à une cinquième résistance.

Un exemple de réalisation de l'invention va maintenant être décrit en regard des dessins annexés, sur lesquels :

- la figure 1 est un schéma d'un dispositif d'alimentation à découpage selon l'état de la technique ;
- la figure 2 représente schématiquement un dispositif d'alimentation à découpage selon la présente invention ;
- la figure 3 représente schématiquement un premier capteur du dispositif d'alimentation de la figure 2 ;
- la figure 4 est une vue schématique d'un deuxième capteur du dispositif d'alimentation de la figure 2 ; et
- la figure 5 représente deux diagrammes des tensions mesurées respectivement par le premier capteur et le deuxième capteur en fonction de la période des perturbations électromagnétiques.

Le dispositif d'alimentation à découpage selon la présente invention, représenté à la figure 2, comprend, outre les éléments décrits précédemment en regard de la figure 1, un premier capteur 1 et un deuxième capteur 2, tous deux reliés à un calculateur 3 destiné à commander l'ouverture et la fermeture du commutateur $T_1$.

Le premier capteur 1 de perturbations électromagnétiques, représenté à la figure 3, est placé entre la tension d'alimentation $V_{in}$ et le commutateur $T_1$. Ce premier capteur électromagnétique comprend une deuxième diode $D_2$, une première résistance RE ainsi qu'une deuxième résistance $R_2$. Le commutateur $T_1$ est relié entre la première résistance RE et la deuxième résistance $R_2$. Un transistor $T_2$ est placé en parallèle sur la deuxième diode D2 et est relié à une troisième résistance RC elle-même reliée à la masse.

Le premier capteur 1 électromagnétique est destiné à détecter la présence ou non d'une demi-résonance du courant $I_c$ circulant dans la première inductance $L_1$ et le premier condensateur $C_1$. La détection de l'achèvement de la demi-résonance est obtenue par la présence d'une tension de Gate $V_G$ du commutateur $T_1$ supérieure à la tension de source $V_S$ par effet MILLER. Par ailleurs, le transistor $T_2$, et les deux résistances RE et RC constituent un translateur de tension $V_G$ - $V_S$ vers la masse électrique. La tension des perturbations électromagnétiques aux bornes de ce premier capteur est :

$$V_{EM1} = \frac{RC}{RE} (V_G - V_S) \text{ lorsque } V_G > V_S$$

Sinon, lorsque $V_G \leq V_S$ on a alors $V_{EM1} = 0$

Le signal ainsi obtenu par ce premier capteur électromagnétique est équivalent à un état indiquant la qualité de la résonance dans le circuit constitué par la première inductance $L_1$ et le premier condensateur $C_1$.

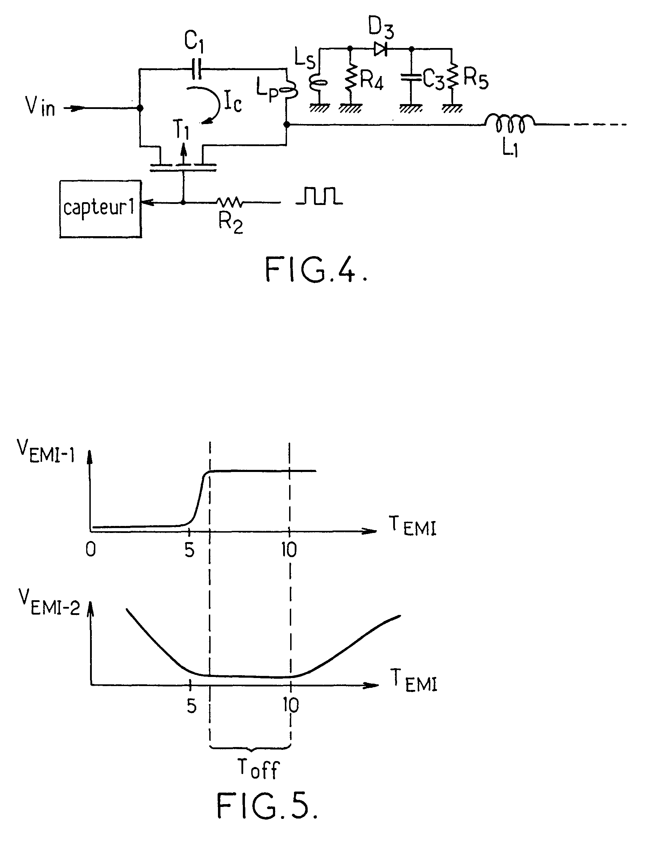

Le deuxième capteur 2 électromagnétique est maintenant décrit en regard de la figure 4. Ce capteur comprend une inductance primaire $L_P$ couplée par air à une inductance secondaire $L_S$. L'inductance primaire $L_P$ est reliée en série au premier condensateur $C_1$. L'inductance secondaire $L_S$ est d'une part reliée à la masse et d'autre part placée en parallèle à une quatrième résistance $R_4$ elle-même reliée à la masse et à une troisième diode $D_3$. Cette troisième diode est reliée à un troisième condensateur $C_3$ lui-même placé en parallèle à une cinquième résistance $R_5$.

Ce deuxième capteur 2 est destiné à détecter par couplage inductif, les pics de courant très brefs circulant dans le commutateur $T_1$ ou bien encore dans le premier condensateur $C_1$. Ces pics de courant très brefs apparaissent lorsque le commutateur $T_1$ décharge brutalement le premier condensateur $C_1$. Ceci se produit lorsque la durée d'ouverture $T_{off}$ de ce commutateur est trop courte ou trop longue.

La bande passante de ce capteur peut être ajustée par la valeur de la quatrième résistance $R_4$. Par ailleurs, la troisième diode $D_3$, le troisième condensateur $C_3$ et la résistance $R_5$ constituent un détecteur-crête de signal et un intégrateur. La tension moyenne $V_{EMI-2}$ obtenue aux bornes de ce capteur est représentative des perturbations électromagnétiques se produisant en fréquences élevées. On mesure ainsi ces perturbations qui correspondent à une commande de la durée d'ouverture $T_{off}$ du commutateur $T_1$ inadaptée, c'est-à-dire trop courte ou trop longue.

Deux courbes représentatives de la variation de la tension aux bornes de ces deux capteurs respectivement en fonction de la période des perturbations électromagnétiques sont représentées à la figure 5. Le calculateur auquel sont reliés les deux capteurs 1 et 2 permet de calculer, à partir de ces deux courbes, la durée $T_{off}$ d'ouverture du commutateur $T_1$. Cette durée $T_{off}$ correspond à la durée pendant laquelle la tension aux bornes du premier capteur est positive et la tension aux bornes du deuxième capteur est proche de 0.

Par ailleurs, à partir de la tension de sortie $V_{out}$ obtenue aux bornes de la charge Z, d'une tension de référence $V_{ref}$, d'une fréquence $F_{min}$ prédéterminée et d'un coefficient a positif, le calculateur délivre la fréquence $F_0$ selon le calcul suivant :

$$F_0 = F_{min} + \alpha (V_{out} - V_{ref})$$

A partir de cette fréquence $F_0$, on obtient la période $T_0$ :

$$T_0 = \frac{1}{F_0} = T_{on} + T_{off}$$

Ainsi, connaissant $T_0$ et ayant calculé $T_{off}$ à partir desdites deux courbes, on obtient également la durée $T_{on}$ de fermeture du commutateur $T_1$.

Par conséquent, le dispositif d'alimentation à découpage selon la présente invention permet de calculer les périodes d'ouverture et de fermeture $T_{off}$ et $T_{on}$ du commutateur $T_1$ afin de minimiser les perturbations électromagnétiques émises et conduites dans le circuit.

Ce dispositif d'alimentation selon la présente invention peut être appliqué à toutes les alimentations à résonance en tension ou en courant qui doivent respecter des normes d'émission de perturbations électromagnétiques, ou bien encore à un prérégulateur automobile, aux alimentations de tableaux de bord, de contrôle moteur ou de climatisation électronique.

## Revendications

1. Dispositif d'alimentation à découpage d'une charge (Z) comprenant une alimentation ($V_{IN}$) reliée à ladite charge (Z) par une structure à résonance comportant, placés en série, un commutateur ($T_1$), une première inductance ($L_1$) et une deuxième inductance ($L_2$), un premier condensateur ($C_1$) étant monté en parallèle sur le commutateur ($T_1$), une cathode d'une première diode ($D_1$) étant reliée entre lesdites première et deuxième inductances ($L_1$) et ($L_2$), l'anode de la première diode ($D_1$) étant reliée à la masse et un deuxième condensateur ($C_2$) étant placé entre la deuxième inductance ($L_2$) et la charge (Z), une armature dudit deuxième condensateur ($C_2$) étant reliée à la masse, **caractérisé en ce que** le dispositif comprend en outre des premiers moyens (1) de détection de la décharge du premier condensateur ($C_1$) pour définir un instant d'obtention d'une demi-résonance du courant ($I_C$) circulant dans le dispositif, des deuxièmes moyens (2) de détection de pics du courant traversant le premier condensateur ($C_1$) pour déterminer l'instant où les perturbations électromagnétiques dans le dispositif sont nulles, ainsi qu'un calculateur (3) permettant de définir une durée ($T_{off}$) pendant laquelle les moyens de détection (1) de la décharge du premier condensateur ($C_1$) mesurent une tension positive et les deuxièmes moyens (2) de détection des pics de courant convertissent les valeurs des pics de courant en une tension moyenne, ($T_{off}$) étant la durée de commande d'ouverture du commutateur ($T_1$).

2. Dispositif d'alimentation à découpage selon la revendication 1, **caractérisé en ce que** les premiers moyens (1) de détection de la décharge du premier condensateur ($C_1$) comprennent un premier capteur placé entre la tension d'alimentation ($V_{in}$) et le commutateur ($T_1$), et les deuxièmes moyens (2) de détection de pics du courant comprennent un deuxième capteur placé entre le premier condensateur ($C_1$) et la première inductance ($L_1$).

3. Dispositif d'alimentation à découpage selon la revendication 2, **caractérisé en ce que** le premier capteur (1) comprend une deuxième diode ($D_2$),

une première résistance (RE) ainsi qu'une deuxième résistance ($R_2$) placées en série, le commutateur ($T_1$) étant relié entre les première et deuxième résistances, un deuxième transistor ($T_2$) étant placé en parallèle sur la deuxième diode ($D_2$) et relié à une troisième résistance (RC) elle-même reliée à la masse.

4. Dispositif d'alimentation à découpage selon la revendication 2 ou 3, **caractérisé en ce que** le deuxième capteur (2) comprend une inductance primaire ($L_P$) placée en série avec le premier condensateur ($C_1$), une inductance secondaire ($L_S$) couplée par air à l'inductance primaire ($L_P$) et placée en parallèle à une quatrième résistance ($R_4$) elle-même reliée à la masse et à une troisième diode ($D_3$), cette troisième diode étant reliée à un troisième condensateur ($C_3$) lui-même relié à une cinquième résistance ($R_5$).

## Claims

1. Switch mode power supply device for a load (Z) comprising a power supply ($V_{IN}$) linked to said load (Z) by a resonance circuit comprising, in series, a switch ($T_1$), a first inductance ($L_1$) and a second inductance ($L_2$), a first capacitor ($C_1$) being mounted in parallel with the switch ($T_1$), the cathode of a first diode ($D_1$) being connected between said first and second inductances ($L_1$) and ($L_2$), the anode of the first diode ($D_1$) being connected to earth and a second capacitor ($C_2$) being placed between the second inductance ($L_2$) and the load (Z), a plate of the second capacitor ($C_2$) being connected to earth, **characterised in that** the device further comprises first means (1) for detecting the discharge of the first capacitor ($C_1$) in order to define an instant of obtaining a semi-resonance of the current ($I_C$) circulating in the device, second means (2) for detecting peaks of the current crossing the first capacitor ($C_1$) in order to determine the instant when the electromagnetic perturbations in the device are zero, and a calculator (3) for defining a duration ($T_{off}$) during which the means (1) for detecting the discharge of the first capacitor ($C_1$) measures a positive voltage and the second means (2) for detecting the current peaks converts the values of the current peaks into a mean voltage, ($T_{off}$) being the duration of opening the switch ($T_1$).

2. Switch mode power supply device according to claim 1 **characterised in that** the first means (1) for detecting the discharge of the first capacitor ($C_1$) comprises a first sensor placed between the power supply ($V_{in}$) and the switch ($T_1$), and the second means (2) for detecting the current peaks comprises a second sensor placed between the first capac-

itor ($C_1$) and the first inductance ($L_1$).

3. Switch mode power supply device according to claim 2 **characterised in that** the first sensor (1) comprises a second diode ($D_2$), a first resistance (RE) and a second resistance ($R_2$) arranged in series, the switch ($T_1$) being connected between the first and second resistances, a second transistor ($T_2$) being arranged in parallel with the second diode ($D_2$) and connected to a third resistance (RC) which itself is connected to earth.

4. Switch mode power supply device according to claim 2 or 3 **characterised in that** the second sensor (2) comprises a primary inductance ($L_P$) arranged in series with the first capacitor ($C_1$), a secondary inductance ($L_S$) coupled through air to the primary inductance ($L_P$) and placed. in parallel with a fourth resistance ($R_4$) which itself is connected to earth and to a third diode ($D_3$), this third diode being connected to a third capacitor ($C_3$) which itself is connected to a fifth resistance ($R_5$)

**Patentansprüche**

1. Vorrichtung zur unterbrechbaren Versorgung einer Last (Z) mit einer Versorgung ($V_{in}$), welche durch einen Resonanzaufbau mit der Last (Z) verbunden ist, die in Reihe angeordnet aufweist einen Schalter ($T_1$), eine erste Induktanz ($L_1$) und eine zweite Induktanz ($L_2$), einen parallel zum Schalter ($T_1$) geschalteten ersten Kondensator ($C_1$), eine zwischen die erste und zweite Induktanz ($L_1$) und ($L_2$) geschaltete Kathode einer ersten Diode ($D_1$), wobei die Anode der ersten Diode ($D_1$) mit Masse verbunden its und ein zweiter Kondensator ($C_2$) zwischen der zweiten Induktanz ($L_2$) und der Last (Z) angeordneten ist wobei ein Belag des zweiten Kondensators ($C_2$) an die Masse gelegt ist, **dadurch gekennzeichnet, daß** die Vorrichtung des weiteren erste Mittel (1) zum Erfassen der Entladung des ersten Kondensators ($C_1$) aufweist, um einen Zeitpunkt zu definieren, in dem eine Halbresonanz des in der Vorrichtung zirkulierenden Stroms ($I_C$) erhalten wird, zweite Mittel (2) zum Erfassen von Spitzen des Stroms, der durch den ersten Kondensator ($C_1$) fließt, um den Zeitpunkt zu bestimmen, in dem die elektromagnetischen Störungen in der Vorrichtung Null sind, sowie eine Recheneinrichtung (3), die es gestattet, eine Zeitdauer ($T_{off}$) zu definieren, während der die Mittel (1) zum Erfassen der Entladung des ersten Kondensators ($C_1$) eine positive Spannung messen und die zweiten Mittel (2) zum Erfassen der Stromspitzen die Werte der Stromspitzen in eine mittlere Spannung umwandeln, wobei ($T_{off}$) die Zeitdauer des Aufsteuerns des Schalters ($T_1$) ist.

2. Vorrichtung zur unterbrechbaren Versorgung nach Anspruch 1, **dadurch gekennzeichnet, daß** die ersten Mittel (1) zum Erfassen der Entladung des ersten Kondensators ($C_1$) einen zwischen der Versorgungsspannung ($V_{in}$) und dem Schalter ($T_1$) angeordneten ersten Sensor aufweisen, und die zweiten Mittel (2) zum Erfassen von Stromspitzen einen zwischen dem ersten Kondensator ($C_1$) und der ersten Induktanz ($L_1$) angeordneten zweiten Sensor aufweisen.

3. Vorrichtung zur unterbrechbaren Versorgung nach Anspruch 2, **dadurch gekennzeichnet, daß** der erste Sensor (1) eine zweite Diode ($D_2$), einen ersten Widerstand (RE) sowie einen zweiten Widerstand ($R_2$) aufweist, die in Reihe geschaltet sind, wobei der Schalter ($T_1$) zwischen den ersten und den zweiten Widerstand geschaltet ist, wobei ein zweiter Transistor ($T_2$) parallel zur zweiten Diode ($D_2$) angeordnet und mit einem dritten Widerstand (RC) verbunden ist, der wiederum an die Masse gelegt ist.

4. Vorrichtung zur unterbrechbaren Versorgung nach Anspruch 2 oder 3, **dadurch gekennzeichnet, daß** der zweite Sensor (2) eine mit dem ersten Kondensator ($C_1$) in Reihe geschaltete Primärinduktanz ($L_P$) aufweist, eine Sekundärinduktanz ($L_S$), die über Luft mit der Primärinduktanz ($L_P$) gekoppelt und parallel zu einem vierten Widerstand ($R_4$) angeordnet ist, der wiederum mit der Masse und einer dritten Diode ($D_3$) verbunden ist, wobei die dritte Diode mit einem dritten Kondensator ($C_3$) verbunden ist, der wiederum mit einem fünften Widerstand ($R_5$) verbunden ist.

FIG.1.

FIG.2.

FIG.3.

FIG.4.

FIG.5.